# EUROPÄISCHE PATENTANMELDUNG

(11) **EP 0 766 988 A1**
(43) Veröffentlichungstag der Anmeldung: **09.04.1997**
(21) Anmeldenummer: 96115233.7
(22) Anmeldetag: 23.09.1996
(51) Int. Cl.: B01D 45/14

(54) **Abscheidevorrichtung zum Abscheiden der in einem Gas-Flüssigkeits-Gemisch enthaltenen Flüssigkeit**

(30) Priorität: 06.10.1995 DE 19537352
(71) Anmelder: SIEMENS AKTIENGESELLSCHAFT, 80333 München (DE)
(72) Erfinder: Dittmar, Rudi, Dr., 98590 Helmers (DE)

(57) **Zusammenfassung**

Die Erfindung betrifft eine Abscheidevorrichtung zum Abscheiden der in einem Gas-Flüssigkeits-Gemisch enthaltenen Flüssigkeit, bei welcher Vorrichtung in einem mit einer Abflußöffnung versehenen Abscheidergehäuse (1) eine von einem Motor (2) angetriebene Rotationsscheibe (4) vorgesehen ist, auf die von der einen Stirnseite (6) des Abscheidergehäuses (1) her das Gas-Flüssigkeits-Gemisch gelenkt ist, welcher Rotationsscheibe (4) gegenüber der Auftreffstelle des Gas-Flüssigkeits-Gemisches radial weiter innen liegend mindestens eine Durchbrechung (9) aufweist und bei welcher Vorrichtung auf der anderen Stirnseite (15) des Abscheidergehäuses (1) eine Gasauslaßöffnung (16) vorgesehen ist und ferner der Durchmesser der Rotationsscheibe (4) in bezug auf den Innendurchmesser des Abscheidergehäuses (1) so dimensioniert ist, daß die Rotationsscheibe (4) in einen sich im Abscheidergehäuse (1) ausbildenden Flüssigkeitsring (8) eintaucht.

## Beschreibung

Die Erfindung bezieht sich auf eine Abscheidevorrichtung zum Abscheiden der in einem Gas-Flüssigkeits-Gemisch enthaltenen Flüssigkeit.

Derartige Abscheidevorrichtungen werden beispielsweise im Zusammenhang mit Flüssigkeitsringverdichtern benötigt, um eine Trennung des von dem Flüssigkeitsringverdichter ausgestoßenen Gas-Flüssigkeits-Gemisches in einen reinen Gas-und einen reinen Flüssigkeitsteil zu erreichen. Durch die DE-A-34 21 866 ist daher ein Flüssigkeitsring-Verdichteraggregat bekannt, bei dem an das Gehäuse des Flüssigkeitsringverdichters ein Abscheidegehäuse angebaut ist. In diesem Abscheidegehäuse wird das Gas-Flüssigkeits-Gemisch an Prallwänden mehrfach umgelenkt, so daß aufgrund der unterschiedlichen Massenträgheit des Gases und der Flüssigkeit bei der Umlenkung des Gemisches an den Prallwänden eine Trennung des Gases von der Flüssigkeit erfolgt. Das Gas wird dann an einer am Abscheidergehäuse geodätisch oben und die Flüssigkeit an einer am Abscheidergehäuse geodätisch weiter unten vorgesehenen Öffnung abgeführt. Um einen hohen Abscheidegrad zu erreichen, muß eine mehrmalige Umlenkung des Gemisches erfolgen. Hierdurch ergibt sich ein relativ hoher Platzbedarf für die Abscheidevorrichtung.

Der Erfindung liegt die Aufgabe zugrunde, eine Abscheidevorrichtung zu schaffen, die sich durch einen hohen Abscheidegrad auszeichnet und dennoch nur wenig Platz beansprucht.

Diese Aufgabe wird bei einer Abscheidevorrichtung zum Abscheiden der in einem Gas-Flüssigkeits-Gemisch enthaltenen Flüssigkeit dadurch gelost, daß bei dieser Vorrichtung in einem mit einer Abflußöffnung für die abgeschiedene Flüssigkeit versehenen Abscheidergehäuse mindestens eine von einem Motor angetriebene Rotationsscheibe vorgesehen ist, auf die von der einen Stirnseite des Abscheidergehäuses her das Gas-Flüssigkeits-Gemisch gelenkt ist, welche Rotationsscheibe gegenüber der Auftreffstelle des Gas-Flüssigkeits-Gemisches radial weiter innen liegend mindestens eine Durchbrechung aufweist und bei welcher Vorrichtung auf der anderen Stirnseite des Abscheidergehäuses eine Gasauslaßöffnung vorgesehen ist und ferner der Durchmesser der Rotationsscheibe in bezug auf den Innendurchmesser des Abscheidergehäuses so dimensioniert ist, daß die Rotationsscheibe in einen sich im Abscheidergehäuse ausbildenden Flüssigkeitsring eintaucht.

Beim Aufprall des Gas-Flüssigkeits-Gemisches auf die Rotationsscheibe werden die Flüssigkeitsteile von dieser nach radial außen abgeschleudert und sammeln sich in dem am Innenumfang des Abscheidergehäuses rotierenden Flüssigkeitsring. Da die Rotationsscheibe mit ihrem Umfangsrand in diesen Flüssigkeitsring eintaucht, ist das Abscheidergehäuse an seinem Innenumfang gegen einen Gasdurchtritt abgedichtet. Das Gas kann somit nur durch die an der Rotationsscheibe vorgesehene Durchbrechung hindurch zu der Gasauslaßöffnung des Abscheidergehäuses strömen.

Zweckmäßigerweise ist der Abflußöffnung ein steuerbares Ventil nachgeschaltet, so daß die Ausbildung des Flüssigkeitsringes insbesondere beim Beginn eines Abscheidevorganges gesteuert werden kann. Dabei ist es vorteilhaft, wenn dieses Ventil in Abhängigkeit von der radialen Dicke des Flüssigkeitsringes und/oder von dem im Flüssigkeitsring herrschenden Druck gesteuert ist.

Der Abscheidegrad der Vorrichtung läßt sich ohne großen Mehraufwand dadurch erhöhen, daß mindestens eine weitere Rotationsscheibe in axialem Abstand zu der einen Rotationsscheibe vorgesehen ist, deren Durchbrechung gegenüber der Durchbrechung der einen Rotationsscheibe wiederum radial weiter innen liegend angeordnet ist. Das durch die Durchbrechung der einen Rotationsscheibe abströmende, noch eine gewisse Flüssigkeitsmenge enthaltende Gas wird auf die der einen Rotationsscheibe strömungsmäßig nachgeordnete weitere Rotationsscheibe gelenkt, wo sich der Abscheidevorgang nochmals wiederholt.

Als wirkungsvoll für den Abscheidevorgang hat es sich erwiesen, daß das Gas-Flüssigkeits-Gemisch in einem schrägen Winkel auf die eine Rotationsscheibe gelenkt ist. Dabei wird die größte Wirkung dann erzielt, wenn das Gas-Flüssigkeits-Gemisch in Drehrichtung der einen Rotationsscheibe auf diese gelenkt ist.

Eine weitere Abscheidewirkung kann dadurch erzielt werden, daß die Gasauslaßöffnung in ein am Abscheidergehäuse vorgesehenes Außengehäuse mündet, an dem geodätisch oben eine Gasaustrittsöffnung und geodätisch unten eine Flüssigkeitsaustrittsöffnung vorgesehen ist. In einem solchen Außengehäuse erfolgt nochmals eine Umlenkung des von dem Abscheidergehäuse her eintretenden Gasstromes. Eventuell in diesem Gasstrom noch enthaltene Flüssigkeitspartikel können bei der Umlenkung noch aus dem Gasstrom abgetrennt werden.

Dadurch, daß in dem Außengehäuse auf der Strecke von der Gasauslaßöffnung des Abscheidergehäuses zu der Gasaustrittsöffnung des Außengehäuses mindestens eine Prallwand eingebaut ist, wird eine das Abscheiden von im Gasstrom noch mitgeführten Flüssigkeitspartikeln begünstigende Mehrfachumlenkung erzielt.

Anhand eines in der Zeichnung dargestellten Ausführungsbeispieles wird die Erfindung nachfolgend näher beschrieben. Es zeigt:

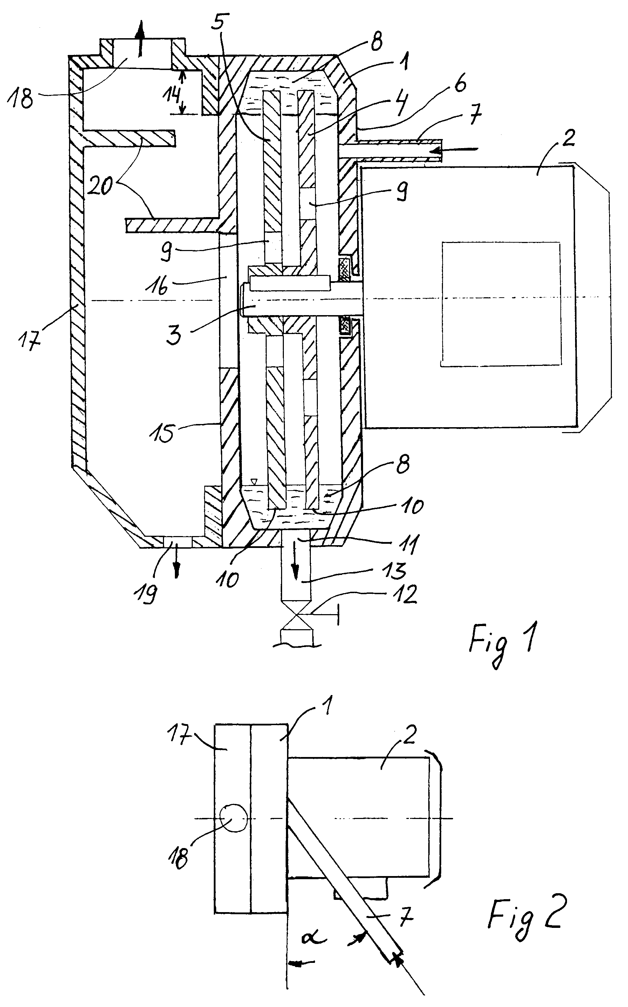

- FIG 1: eine Abscheidevorrichtung im Schnitt
- FIG 2: in verkleinerter Darstellung eine Draufsicht einer Abscheidevorrichtung.

Mit 1 ist das Gehäuse eines Abscheiders bezeichnet. An diesem Abscheidergehäuse 1 ist ein Motor 2 angeflanscht, auf dessen in das Abscheidergehäuse 1 ragenden Wellenende 3 zwei Rotationsscheiben 4 und 5 drehfest angeordnet sind. Von der dem Motor 1 benachbarten einen Stirnseite 6 kann über einen Anschlußstutzen 7 ein Gas-Flüssigkeits-Gemisch in das Abscheidergehäuse eingebracht werden, das dann auf die eine Rotationsscheibe 4 auftrifft. Dabei werden die im Gas-Flüssigkeitsgemisch enthaltenen Flüssigkeitsteile nach radial außen abgeschleudert und sammeln sich in einem am Innenumfang des Abscheidergehäuses 1 rotierenden Flüssigkeitsring 8. Gegenüber der in etwa in der Flucht der Mündung des Anschlußstutzens 7 in das Abscheidergehäuse 1 liegenden Auftreffstelle des Gas-Flüssigkeits-Gemisches auf die Rotationsscheibe 4 ist an dieser radial weiter innen liegend mindestens eine Durchbrechung 9 vorgesehen. Vorteilhaft ist eine umfangsmäßig gleich verteilte Anordnung mehrerer Durchbrechungen 9.

An der weiteren Rotationsscheibe 5 sind die Durchbrechungen 9 gegenüber den Durchbrechungen 9 der einen Rotationsscheibe 4 radial weiter innen angeordnet. Der radiale Versatz der Durchbrechungen 9 der beiden Rotationsscheiben 4 und 5 ist so gewählt, daß sich die Durchbrechungen 9 in radialer Richtung nicht überlappen. Hierdurch wird ein direkter Durchtritt des Gas-Flüssigkeits-Gemisches von den Durchbrechungen 9 der einen Rotationsscheibe 4 durch die Durchbrechungen 9 der weiteren Rotationsscheibe 5 verhindert. Das Gas-Flüssigkeits-Gemisch trifft vielmehr nach Durchströmen der Durchbrechungen 9 der einen Rotationsscheibe 4 auf die Fläche der weiteren Rotationsscheibe 5, so daß die noch im Gas-Flüssigkeits-Gemisch enthaltenen Flüssigkeitsteile von der weiteren Rotationsscheibe 5 nach radial außen in den Flüssigkeitsring 8 abgeschleudert werden.

Die Rotationsscheiben 4 und 5 sind hinsichtlich ihres Durchmessers so dimensioniert, daß sie mit ihrem Umfangsrand 10 in den Flüssigkeitsring 8 eintauchen. An dem Abscheidergehäuse 1 ist an einer geodätisch unten liegenden Stelle eine Abflußöffnung 11 vorgesehen, an die eine mit einem steuerbaren Ventil 12 versehene Abflußleitung 13 angeschlossen ist. Das Ventil 12 kann in Abhängigkeit von dem im Flüssigkeitsring 8 herrschenden Druck und/oder in Abhängigkeit von der radialen Dicke 14 des Flüssigkeitsringes 8 gesteuert werden. Damit wird sichergestellt, daß die Rotationsscheiben 4 und 5 während des Betriebes der Abscheidevorrichtung stets mit Ihrem Umfangsrand 10 in den Flüssigkeitsring 8 eintauchen und somit ein Durchströmen des Gases zwischen dem Umfangsrand 10 der Rotationsscheiben 4 und 5 und der Innenwand des Abscheidergehäuses 1 zu einer an der anderen Stirnseite 15 des Abscheidergehäuses 1 ausgebildeten Gasauslaßöffnung 16 verhindern. Das Gas muß vielmehr durch die Durchbrechungen 9 der beiden Rotationsscheiben 4 und 5 hindurchströmen, um zu der Gasauslaßöffnung 16 zu gelangen.

Über die Gasauslaßöffnung 16 tritt der bereits weitgehend von Flüssigkeitsanteilen befreite Gasstrom in ein an dem Abscheidergehäuse 1 angebautes Außengehäuse 17 ein. Dieses Außengehäuse 17 weist geodätisch oben eine Gasaustrittsöffnung 18 und eine geodätisch zumindest unterhalb der Gasauslaßöffnung 16 des Abscheidergehäuses 1 liegende Flüssigkeitsaustrittsöffnung 19 auf. Ferner sind in dem Außengehäuse 17 noch zwei Prallwände 20 angebracht, die in radialer Richtung voneinander beabstandet sind, sich jedoch in axialer Richtung überlappen. Somit wird eine weitere Umlenkung des Gasstromes auf seinem Weg von der Gasauslaßöffnung 16 des Abscheidergehäuses 1 zu Gasaustrittsöffnung 18 des Außengehäuses 17 bewirkt.

Durch diese weitere Umlenkung wird eine Abscheidung von eventuell noch im Gasstrom mitgeführten Flüssigkeitspartikeln erreicht. Die abgesonderten Flüssigkeitsteile können sich in dem unteren Bereich des Außengehäuses 17 sammeln und über die Flüssigkeitsaustrittsöffnung 19 aus dem Außengehäuse 17 abgelassen werden.

Der Anbau eines Außengehäuses 17 an das Abscheidergehäuse 1 ist nicht obligatorisch. Das Gas kann auch schon unmittelbar von der Gasauslaßöffnung 16 des Abscheidergehäuses 1 abgeführt werden.

Die Abscheidevorrichtung muß auch nicht zwangsläufig mit einem eigenen Antriebsmotor 2 versehen sein. Es besteht die Möglichkeit, diese Vorrichtung mit dem Antrieb der das Gas-Flüssigkeits-Gemisch erzeugenden Maschine zu koppeln. Wenn die Abscheidevorrichtung beispielsweise einer Flüssigkeitsringmaschine zugeordnet ist, so kann der Antrieb der Rotationsscheiben 4 und 5 durch den Antriebsmotor der Flüssigkeitsringmaschine erfolgen.

Wie bereits erwähnt werden beim Auftreffen des Gas-Flüssigkeits-Gemisches auf die eine Rotationsscheibe 4 die auftreffenden Flüssigkeitsteile durch die Zentrifugalkraft nach außen in den Flüssigkeitsring 8 geschleudert. Dieser Vorgang wiederholt sich dann nochmals an der weiteren Rotationsscheibe 5. Auf diese Weise wird ein sehr hoher Abscheidegrad erreicht, wobei der Raumbedarf für die Abscheidevorrichtung relativ klein ist. Die Abscheidevorrichtung kann zur weiteren Erhöhung des Abscheidegrades auch mit mehr als zwei Rotationsscheiben 4 und 5 ausgerüstet werden, wobei die an den einzelnen Rotationsscheiben vorgesehenen Durchbrechungen 9 von der Einlaßseite zu der Auslaßseite des Abscheiders hin radial immer weiter nach innen zur Welle anzuordnen sind und zwar so, daß von Rotationsscheibe zu Rotationsscheibe keine radiale Überdeckung der Durchbrechungen vorliegt.

Um ein schräges Auftreffen des Gas-Flüssigkeits-Gemisches auf die eine Rotationsscheibe 4 zu erreichen, ist der Anschlußstutzen 7 um einen Winkel α gegenüber der Ebene der einen Stirnseite 6 geneigt an dieser Stirnseite 6 angeordnet, wie dies die Fig. 2 zeigt. Ein Winkel α von 45° hat sich als besonders wirksam erwiesen.

## Patentansprüche

1. Abscheidevorrichtung zum Abscheiden der in einem Gas-Flüssigkeits-Gemisch enthaltenen Flüssigkeit, bei welcher Vorrichtung in einem mit einer Abflußöffnung (11) für die abgescchiedene Flüssigkeit versehenen Abscheidergehäuse (1) mindestens eine von einem Motor (2) angetriebene Rotatiosscheibe (4) vorgesehen ist, auf die von der einen Stirnseite (6) des Abscheidergehäuses (1) her das Gas-Flüssigkeits-Gemisch gelenkt ist, welche Rotationsscheibe (4) gegenüber der Auftreffstelle des Gas-Flüssigkeits-Gemisches radial weiter innenliegend mindestens eine Durchbrechung (9) aufweist und bei welcher Vorrichtung auf der anderen Stirnseite (15) des Abscheidergehäuses (1) eine Gasauslaßöffnung (16) vorgesehen ist und ferner der Durchmesser der Rotationsscheibe (4) in bezug auf den Innendurchmesser des Abscheidergehäuses (1) so dimensioniert ist, daß die Rotationsscheibe (4) zumindest mit ihrem Umfangsrand (10) in einen sich im Abscheidergehäuse (1) ausbildenden Flüssigkeitsring (8) eintaucht.

2. Abscheidevorrichtung nach Anspruch 1,
**dadurch gekennzeichnet,**
daß der Abflußöffnung (11) ein steuerbares Ventil (12) nachgeordnet ist.

3. Abscheidevorrichtung nach Anspruch 2,
**dadurch gekennzeichnet,**
daß das Ventil (1) in Abhängigkeit von der radialen Dicke (14) des Flüssigkeitsringes (8) und/oder von dem im Flüssigkeitsring (8) herrschenden Druck gesteuert ist.

4. Abscheidevorrichtung nach einem der vorhergehenden Ansprüche,
**dadurch gekennzeichnet,**
daß mindestens eine weitere Rotationsscheibe (5) in axialem Abstand zu der einen Rotationsscheibe (4) vorgesehen ist, deren Durchbrechung (9) gegenüber der Durchbrechung (9) der einen Rotationsscheibe (4) wiederum radial weiter innen liegend angeordnet ist.

5. Abscheidevorrichtung nach einem der vorhergehenden Ansprüche,
**dadurch gekennzeichnet,**
daß das Gas-Flüssigkeits-Gemisch in einem schrägen Winkel auf die eine Rotationsscheibe (4) gelenkt ist.

6. Abscheidevorrichtung nach Anspruch 5,
**dadurch gekennzeichnet,**
daß das Gas-Flüssigkeits-Gemisch in Drehrichtung der einen Rotationsscheibe (4) auf diese gelenkt ist.

7. Abscheidevorrichtung nach einem der vorhergehenden Ansprüche,
**dadurch gekennzeichnet,**
daß die Gasauslaßöffnung (16) in ein am Abscheidergehäuse vorgesehenes Außengehäuse (17) mündet, an dem geodätisch oben eine Gasaustrittsöffnung (18) und geodätisch unten eine Flüssigkeitsaustrittsöffnung (19) vorgesehen ist.

8. Abscheidevorrichtung nach Anspruch 7,
**dadurch gekennzeichnet,**
daß in dem Außengehäuse (17) auf der Strecke von der Gasauslaßöfffnung (16) des Abscheidergehäuses (1) zu der Gasaustrittsöffnung (18) des Außengehäuses (17) mindestens eine Prallwand (20) eingebaut ist.
